# EUROPEAN PATENT SPECIFICATION

(11) **EP 0 394 964 B1**
(45) Date of publication and mention of the grant of the patent: **02.08.1995**
(21) Application number: 90107772.7
(22) Date of filing: 24.04.1990
(51) Int. Cl.: C23C 8/10, C23C 8/12, C09C 1/04, C09C 1/62, B22F 1/00, C22C 18/00

(54) **Colored zinc powder, its method of production and method for producing colored article**
Gefärbtes Zinkpulver, Verfahren zu dessen Herstellung und Verfahren zur Herstellung gefärbter Formkörper
Poudre de zinc coloré, son procédé de préparation et procédé de production d'article coloré

(30) Priority: 27.04.1989 JP 105819/89
(43) Date of publication of application: 31.10.1990
(73) Proprietor: NIPPON MINING & METALS COMPANY, LIMITED, Tokyo (JP)
(72) Inventor: Nishimura, Eiji, Hatoyama-machi, Hiki-gun, Saitama (JP); Tominaga, Chikara, Kohoku-ku, Yokohama-shi, Kanagawa (JP); Masuda, Yusaku, 1604 Horikiri, Kurobe-shi, Toyama (JP); Tasaki, Hiroshi, Shikatebukuro, Urawa-shi, Saitama (JP)
(74) Representative: Kador & Partner

(56) References cited:
- EP-A- 0 089 608
- EP-A- 0 269 005
- GB-A- 1 195 904
- US-A- 4 820 552
- WORLD PATENT INDEX, FILE SUPPLIER, abstract AN=77-44342Y, Derwent Publications Ltd, London, GB

## Description

### BACKGROUND OF INVENTION

### 1. Field of Invention

The present invention relates to colored zinc alloy particles, and a method for producing colored zinc powder as defined in claim 1. The present invention also relates to the coloring of articles.

### 2. Description of Related Arts

A technique for color development is described in Japanese Unexamined Patent Publication No. 60-129,788. That is, steel or the like is hot-dip galvanized in a zinc bath which contains Ti, V or Mn, and is then heated so as to develop the color.

However, colored zinc powder or colored zinc-alloy powder on which the color is developed, is heretofore unknown.

The color developing method by hot-dip galvanizing is applied to basic materials such as a steel sheet, a steel pipe, and the like, but it is difficult to apply it to materials which are already assembled into final products. In addition, the color developing method by hot-dip galvanizing is difficult to apply locally on portions of the material. There are, in addition, such drawbacks as: color development of dark brown is difficult; the throwing power of melt by the plating bath on a steel product having a curved surface is too weak to provide uniform development of color; and, application to metals other than iron is difficult.

US-A-4,829,552 is disclosing a process for making coated zinc metal flakes wherein finely devided zinc metal powder is dispersed and coated in presence of solid metal oxides, for instance, titanium dioxide. These coated zinc flakes have improved anticorrosive properties when used as pigments in paints and coatings.

In JP 52 057 239 a coloured resin powder or metallic powder is built up on an unfired substrate which has been coated by electroposition. By this method the thickness of the coated film, appearance, colour tone, hardness and corrosion resistance can be selected arbitrarily.

EP 0 269 005 is concerned with a coloured zinc coating. Particularly a method is described for forming a coloured zinc coating on an iron or steel surface in which a base metal of iron or steel is coated by hot-dipping in a bath or spraying with a zinc alloy containing 0.1 - 2.0 wt.% Ti and optionally up to 5.9 wt.% Pb, up to 0.2 wt.% Cd, up to 4.0 wt.% each of Mn, Cu, Cr, Ni, up to 0.05 wt.% each of Sn, Bi and In, the balance being Zn.

### SUMMARY OF THE INVENTION

It is an object of the present invention to provide a colored zinc powder which does not incur the above described drawbacks and which can be broadly applied to articles and materials having various configurations.

It is another object of the present invention to provide a method for producing the colored-zinc powder.

It is a further object of the present invention to provide a method for producing an article colored by the colored zinc powder.

In accordance with the objects of the present invention there is provided a method for producing a coloured zinc powder comprising the steps of preparing particles consisting essentially of a zinc alloy containing 1.5 wt.% or less in total of Pb, Cd and Fe as impurities and 0.01 to 10 wt.% of a colouring element which is at least one element selected from the group consisting of Ti, Mn and V and oxidizing the surface of said particles at a temperature in a range of from 450 to 700° whereby said surface becomes coloured. Preferred embodiments of this method are defined in subclaims 2 to 6. Object of the present invention are also the coloured zinc alloy particles obtained by the method and the use of the coloured zinc powder for producing a coloured article by spraying a substrate therewith or by bonding the powder on a binder applied on a substrate.

### DESCRIPTIONS OF THE PREFERRED EMBODIMENTS

The zinc of colored zinc powder according to the present invention contains the additive elements, i.e., the coloring elements, described below. The additive elements are added to distilled zinc metal (grade 1, purity 98.5 % or more) and the purest zinc metal (purity 99.995 %) stipulated in JIS H 2107, and zinc metal for electric purpose (purity 99.99 % or more). The additive elements are Ti, Mn, V, and are added in an amount of from 0.01 to 10 % by weight. Pb in an amount of 1.5 % by weight or less, Cd in an amount of 0.1 % by weight or less and Fe in an amount of 0.02 % or less are contained in the distilled zinc metal (grade 1) as impurities. The content of the impurities is 0.005 % by weight or less in the case of the purest zinc metal and zinc metal for electric purposes. The total content of the impurities is preferably 1.5 % by weight or less from a view point of the color development.

The surface of the zinc-alloy powder with the additive elements described above is oxidized so as to develop color. The color development is attributable to interference of the light on the oxide film.

The size of the colored zinc powder according to the present invention can be optionally selected, and, the color development is possible in a broad range of from 5 »m to 10 mm of the powder size.

A preferable size of the colored zinc powder for spraying is from 40 to 100 »m. A preferable size of the colored zinc powder for use as pigment is from 10 to 30 »m.

The colored zinc powder according to the present invention is preferably spherical. Since the spherical powder has a smoother surface than irregular shaped powder, it is easier to control the color development in the former powder than in the latter. It is thus easy to develop various colors on the spherical powder.

The colored zinc powder according to the present invention exhibits both the rust-proofing effect and the coloring effect of pigment in paint. The colored zinc powder according to the present invention is easily applied to parts having complicated shape and provides uniform color without shading.

The colored zinc powder according to the present invention can be applied on such materials as steel, aluminum and ceramics.

The colored zinc powder according to the present invention can be used as pigment in paint.

The method for producing the colored zinc powder according to the present invention is described hereinafter.

The zinc alloy with the additive element(s) are crushed to yield the uncolored powder. In the case of crushing method, a large amount of additive element(s) ranging from 0.5-10 % by weight is preferably added to the zinc to embrittle it. The so crushed powder is then heated to a temperature of from 450 to 700 °C. This temperature is occasionally higher than the melting point of the zinc alloy. But, the zinc alloy does not melt down because its surface is slightly oxidized during heating. As a result of oxidizing, the uncolored powder is converted to the colored powder which develops fresh color on the surface thereof. The oxidizing time is usually from 3 seconds to 100 minutes. A different color develops depending upon the length of the oxidizing time. For example, in the case of the addition of titanium, the color development varies successively with the prolongation of the oxidizing time, so that brown, navy blue, blue, greenish brown appear successively. That is, the identical cycle of color change is repeated. In the case of the addition of vanadium, one cycle of color change is the successive appearance of yellow, green, and dark blue. In the case of the addition of manganese one cycle of color change is the successive appearance of yellow, yellow green, greenish brown, green, and coffee brown.

In order to obtain a fresher color, it is preferable that the uncolored powder be held in an atmosphere of inert gas, for example Ar gas, or neutral gas, for example N₂ gas, which contains from 0.003 to 1 % of oxygen, until the temperature is elevated to a holding temperature in the range of from 450 to 700 °C. The inert or neutral atmosphere containing less than 1 % of oxygen can prevent the powder surface from excess oxidation of zinc during the temperature elevation, thereby aiding color development. The subsequent oxidation by the oxygen-containing gas with the oxygen content of 0.003 - 1 % after heating in the inert or neutral atmosphere is desirable for preferential oxidation of the additive element(s) and hence for fresh color development.

According to another method for producing colored zinc powder according to the present invention, zinc alloy containing the additive elements is melted and then atomized in an atmosphere of oxygen-containing gas or inert gas so as to provide the zinc-alloy powder. This powder is then subjected to oxidation in a fluidized bed at a temperature of from 450 to 700 °C for a certain time period to obtain a specific color.

For the atomizing method in oxygen-containing gas, it is preferable that an atomizing apparatus be connected with an apparatus for creating a fluidized bed, thereby enabling continuous oxidation of the zinc-alloy powder. The zinc-alloy powder is difficult to spheroidize by atomizing in the oxygen-containing gas. It is preferred that the atomizing be carried out in the inert or neutral gas with the oxygen content of from 0 to 5 %, and, further the oxidation be carried out in an apparatus separate from the atomizing apparatus.

In accordance with the present invention, the colored zinc powder is sprayed on an article by the conventional thermal spraying method for Zn powder. It is possible to color various articles and to improve the corrosion resistance of the articles.

It is also possible to bond the colored zinc powder onto materials having an adhesive surface. The so-colored plate can be used as a decorative panel. The surface of the colored plate may become rough due to application of the colored zinc powder. It is therefore preferable that a transparent organic agent be applied on the surface colored by the colored zinc powder.

The present invention is described hereinafter with reference to the examples.

### Example 1

Ti was added to the distilled zinc metal (98.5 wt%). The so-obtained Zn alloy contained 5 wt% of Ti and had melting point of 620 °C. The alloy was crushed and then sieved to prepare the powder having size of 50 »m or less. The powder was heated in the Ar atmosphere up to 550 °C. When the temperature was elevated to 550 °C, the Ar atmosphere containing 0.05 % of oxygen was replaced with air. The oxidation was then carried out at 550 °C.

The powder was gray before heating. After oxidation for 30 seconds, the powder was converted to yellowish brown. The color changed as follows: after 1.5 minutes - dark brown, after 2 minutes - navy blue, after 3 minutes - light blue, after 4.5 mitutes - greenish brown, and after 14 minutes - brown. The colors mentioned above were obtained by holding the powder at 550 °C for the respective time followed by cooling.

### Example 2

The same procedure using the same powder as in Example 1 was carried out at an oxidation temperature of 500 °C. The color development and color change occurred more slowly as compared with in Example 1. It was therefore easier in Example 2 to obtain one of the desired colors described in Example 1.

### Example 3

Ti was added to the distilled zinc metal (98.5 wt%). The so obtained zinc-alloy contained 0.25 wt% of Ti and had a melting point of 450 °C. The zinc alloy was melted at 550 °C and then atomized by N₂ gas in neutral atmosphere. The chamber of the atomizing apparatus contained traces of oxygen (3 vol %), the balance being N₂. The zinc powder obtained by atomizing was spherical. The zinc powder was heated to 550 °C and fluidized in an apparatus which was provided with a means for creating the fluidized bed. The color development at respective oxidizing times was as follows: light yellow at 30 seconds; orange at 1.5 minutes; reddish purple at 2.0 minutes; bluish purple at 3.0 minutes; blue at 4.5 minutes; light green at 6 minutes; and dark green at 14 minutes.

### Example 4

The brown zinc-alloy powder obtained in Example 1 (Ti content - 5 wt%) was sprayed on a flat steel plate.

The spraying condition was as follows.
A spraying gun - METCO 6P - II
Flame gas - acethylene [1.03 bar (15 psi)] + oxygen [2.06 bar (30 psi)]
Spraying air - nitrogen [3.8 bar (55 psi)]
Pinch air - air [3.4 bar (50 psi)]
Spraying distance - 200 mm
A plate having brown appearance was obtained.

The spraying on curved steel sheets was also carried out using the Zn-5 wt% Ti, brown powder. A uniform brown appearance was obtained.

### Example 5

Greenish brown zinc powder (Ti content - 5 %) having a particle diameter of approximately 50 »m was uniformly applied on a steel substrate having an adhesive surface. The adhesive surface was provided by applying silicone binder (Shin-etsu Silicone (product of Shin-etsu Chemical Co., Ltd.)) on the steel substrate. The surface of the steel sheet, on which the greenish brown powder was applied, was somewhat rough. Transparent urethane resin (High Urethane (product of Nihon Yushi Co., Ltd.)) was applied on the colored surface. As a result, a decorative panel having lustrous appearance was obtained.

### Example 6

Navy blue zinc powder (Ti content - 5 wt%) obtained in Example 1 and having average particle size of 50 »m were mixed with urethane resin (the same product as used in Example 5). The proportion of the zinc powder was 100 parts by weight relative to 100 parts by weight of the urethane resin. The paint prepared by mixing as described above was applied on a steel sheet to a thickness of 40 »m and was then subjected to natural drying. As a result, a navy blue appearance was obtained.

### Example 7

Zn alloy containing 5 wt% of Mn was crushed and then sieved to prepare the powder 100 - 200 mesh in size. The so prepared powder was heated as in Example 1. Coffee brown color developed by heating at 550 °C for 30 minutes. Slightly greenish brown color developed by heating at 500 °C for 30 minutes.

Heating in air was also carried out at 450 °C for 30 minutes. The greenish brown color then developed.

## Claims

1. A method for producing a coloured zinc powder comprising the steps of preparing particles consisting essentially of a zinc alloy containing 1.5 wt % or less in total of Pb, Cd and Fe as impurities and 0,01 to 10 wt.% of a colouring element which is at least one element selected from the group consisting of Ti, Mn and V and oxidizing the surface of said particles at a temperature in a range of from 450 to 700°C whereby said surface becomes coloured.

2. The method of claim 1, wherein the zinc alloy particles are prepared by spraying a zinc melt which contains the colouring element.

3. The method of claim 1, wherein the zinc alloy particles are prepared by crushing the zinc which contains the colouring element.

4. The method of claim 2, wherein the spraying is carried out in an inert or neutral atmosphere having an oxygen content of 5 % by volume or less.

5. The method of claim 1, further comprising a step of elevating the temperature up to said range in an inert or neutral atmosphere containing from 0.003 to 1 % of oxygen.

6. The method according to claim 1, wherein the oxidation is carried out in a fluidizing bed wherein the zinc alloy particles are fluidized.

7. Coloured zinc alloy particles obtained by the method as claimed in any one of claims 1 to 6.

8. Use of the coloured zinc powder obtained by any one of claims 1 to 6 for producing a coloured article by spraying a substrate with the coloured zinc powder.

9. Use according to claim 8, wherein the coloured article is produced by bonding the powder on a binder applied on a substrate.

## Patentansprüche

1. Verfahren zur Herstellung von gefärbtem Zinkpulver, welches die Schritte umfaßt: Herstellen von Partikeln, die im wesentlichen aus einer Zinklegierung bestehen, die insgesamt 1,5 Gew.-% oder weniger an Pb, Cd und Fe als Verunreinigungen und 0,01 bis 10 Gew.-% eines färbenden Elementes enthält, das mindestens ein Element aus der Gruppe ist, die aus Ti, Mn und V besteht, und Oxidieren der Oberfläche der Partikel bei einer Temperatur im Bereich von 450 bis 700°C, wodurch die Oberfläche gefärbt wird.

2. Verfahren nach Anspruch 1, wobei die Zinklegierungspartikel durch Sprühen einer Zinkschmelze hergestellt werden, die das färbende Element enthält.

3. Verfahren nach Anspruch 1, wobei die Zinklegierungspartikel durch Zerkleinern von Zink hergestellt werden, das das färbende Element enthält.

4. Verfahren nach Anspruch 2, wobei das Sprühen in einer inerten oder neutralen Atmosphäre erfolgt, die einen Sauerstoffgehalt von 5 Vol.-% oder weniger aufweist.

5. Verfahren nach Anspruch 1, das ferner den Schritt der Temperaturerhöhung bis zu diesem Bereich in einer inerten oder neutralen Atmosphäre umfaßt, die 0,003 bis 1% Sauerstoff enthält.

6. Verfahren nach Anspruch 1, wobei die Oxidation in einem Wirbelbett erfolgt, worin die Zinklegierungspartikel verwirbelt werden.

7. Gefärbte Zinklegierungspartikel, die nach dem Verfahren nach einem der Ansprüche 1 bis 6 erhalten werden.

8. Verwendung des nach einem der Ansprüche 1 bis 6 erhaltenen gefärbten Zinkpulvers zur Herstellung eines gefärbten Gegenstandes durch Besprühen eines Substrats mit dem gefärbten Zinkpulver.

9. Verwendung nach Anspruch 8, wobei der gefärbte Gegenstand durch Binden des Pulvers auf einem auf dem Substrat aufgebrachten Bindemittel hergestellt wird.

## Revendications

1. Procédé pour préparer une poudre de zinc coloré comprenant les étapes de préparation de particules constituées essentiellement d'un alliage de zinc contenant 1,5 % p ou moins, au total, de Pb, Cd et Fe, en tant qu'impuretés, et 0,01 à 10 % p d'un élément colorant qui est au moins un élément choisi dans le groupe constitué par Ti, Mn et V, et d'oxydation de la surface desdites particules à une température comprise dans une gamme de 450 à 700°C pour que ladite surface devienne colorée.

2. Procédé selon la revendication 1, dans lequel les particules d'alliage de zinc sont préparées par pulvérisation d'une masse fondue de zinc qui contient l'élément colorant.

3. Procédé selon la revendication 1, dans lequel les particules d'alliage de zinc sont préparées par broyage du zinc qui contient l'élément colorant.

4. Procédé selon la revendication 2, dans lequel la pulvérisation est effectuée dans une atmosphère inerte ou neutre ayant une teneur en oxygène de 5 % en volume ou moins.

5. Procédé selon la revendication 1 comprenant de plus une étape d'élévation de la température jusqu'à ladite gamme, dans une atmosphère inerte ou neutre contenant de 0,003 à 1 % d'oxygène.

6. Procédé selon la revendication 1, dans lequel l'oxydation est effectuée dans un lit de fluidisation dans lequel les particules d'alliage de zinc sont fluidisées.

7. Particules d'alliage de zinc coloré obtenues selon le procédé de l'une quelconque des revendications 1 à 6.

8. Utilisation de la poudre de zinc coloré obtenue selon l'une quelconque des revendications 1 à 6 pour la production d'un article coloré par pulvérisation d'un substrat avec la poudre de zinc coloré.

9. Utilisation selon la revendication 8, dans laquelle l'article coloré est produit par liaison de la poudre sur un liant appliqué sur un substrat.
